# EUROPÄISCHE PATENTANMELDUNG

(11) **EP 4 180 859 A1**
(43) Veröffentlichungstag der Anmeldung: **17.05.2023**
(21) Anmeldenummer: 22207549.1
(22) Anmeldetag: 15.11.2022
(51) Int. Cl.: G02B 26/10, B23K 26/06, B23K 26/082, G02B 1/02

(54) **ABLENKVORRICHTUNG MIT BESCHICHTETEM SPIEGELELEMENT SOWIE LASERBEARBEITUNGSKOPF MIT DERSELBEN**

(30) Priorität: 16.11.2021 DE 102021129829
(71) Anmelder: Precitec GmbH & Co. KG, 76571 Gaggenau-Bad Rotenfels (DE)
(72) Erfinder: Blázquez Sánchez, David, 76571 Gaggenau (DE)
(74) Vertreter: Ter Meer Steinmeister & Partner

(57) **Zusammenfassung**

Ablenkvorrichtung (14) für einen Laserbearbeitungskopf (100) zum Ablenken eines Bearbeitungslaserstrahls (15) für die Bearbeitung eines Werkstücks (13), wobei die Ablenkvorrichtung (14) umfasst: zumindest ein Spiegelelement (10), das verformbar ist und/oder beweglich angeordnet ist, um den Bearbeitungslaserstrahl (15) auf verschiedene Positionen auf dem Werkstück (13) zu richten, wobei das Spiegelelement (10) mindestens ein Substrat (4) und mindestens eine auf dem Substrat (4) angeordnete reflektierende Multischichtstruktur (3) aufweist, in der eine Mehrzahl von kristallinen ersten Schichten (1) mit ersten Brechungsindizes in einem ersten Wertebereich und eine Mehrzahl von kristallinen zweiten Schichten (2) mit zweiten Brechungsindizes in einem zweiten Wertebereich alternierend übereinander angeordnet sind, und wobei die ersten Brechungsindizes der kristallinen ersten Schichten (1) und die zweiten Brechungsindizes der kristallinen zweiten Schichten (2) voneinander verschieden sind.

## Beschreibung

Die vorliegende Erfindung betrifft eine Ablenkvorrichtung für einen Laserbearbeitungskopf mit einem Spiegelelement zum Ablenken eines Bearbeitungslaserstrahls und für die Bearbeitung eines Werkstücks, sowie einen Laserbearbeitungskopf umfassend die Ablenkvorrichtung.

### Hintergrund und Stand der Technik

Auf dem technischen Gebiet der Laser-Materialbearbeitung werden vermehrt Lasersysteme mit sehr hoher Laserleistung eingesetzt. Dadurch steigen die Anforderungen an Laserbearbeitungsköpfe und darin enthaltene optische Elemente, wie beispielsweise alternative Spiegel oder alternative Spiegelelemente zu schweren Kupferspiegeln, da die hohen Laserleistungen zu hohen Wärmeeinträgen in den optischen Elementen führen können. Insbesondere an Faser geführte Systeme sind die Anforderungen gestiegen, um diese hohe Leistung zu erhalten.

Bei Systemen und optischen Elementen in Laserbearbeitungsköpfen, die nicht an die Anforderungen der Hochleistungslaser angepasst werden, muss daher damit gerechnet werden, dass diese nach kurzer Zeit eine Materialermüdung aufgrund hoher Wärmeeinträge erleiden, von dem Laserstrahl beschädigt oder gar zerstört werden und eine unzureichende Performance bei der Bearbeitung eines Werkstücks aufweisen. Überdies kann der Bearbeitungslaserstrahl durch thermische Drift in einem optischen Element sukzessive von dem vorbestimmten Strahlengang abgelenkt oder versetzt werden, was nur schwierig zu kontrollieren und zu kompensieren ist. Durch die Verwendung von Bearbeitungslasern mit hoher Leistung müssen daher die Eigenschaften der optischen Elemente in Laserbearbeitungsköpfen angepasst werden, um eine zufriedenstellende Effizienz bzw. Performance zu erzielen.

Eine große Herausforderung bei der Anpassung von Laserbearbeitungsköpfen an hohe Laserleistungen liegt dabei in der Vermeidung von Temperaturerhöhungen auf Spiegeloberflächen. Die Erwärmung einer Spiegelfläche kann im schlimmsten Fall die maximale Laserleistung für die Materialbearbeitung begrenzen. Der Grund für die Erwärmung liegt in den inhärenten Eigenschaften, insbesondere den Materialeigenschaften der Spiegelbeschichtungen. Abhängig von den verwendeten Materialien kann zwischen metallischen und dielektrischen Beschichtungen unterschieden werden. Metallbeschichtungen basieren auf einem stark reflektierenden Material wie Aluminium, Silber oder Gold, das auf einem Substratmaterial abgeschieden wird. Aufgrund des hohen Absorptionsgrades von metallischen Schichten können solche Spiegel nur bedingt in Systemen verwendet werden, in denen eine hohe Lichtleistungsdichte verwendet wird. Moderne dielektrische Beschichtungen, auch Dünnfilmschichten oder Interferenzschichten genannt, bestehen aus dünnen Schichten transparenter, alternierender dielektrischer Materialien mit stark unterschiedlichem Brechungsindex wie SiO₂ und Ta₂O₅, die auf ein Substrat aufgebracht werden. Ihre Funktion besteht im Wesentlichen darin, die Reflexionseigenschaften der Oberfläche zu verändern, indem sie die Interferenz der Reflexionen mehrerer optischer Schichten ausnutzen. Sie können für hochreflektierende (HR) Laserspiegel, für Antireflexbeschichtungen (AR), für dichroitische (verschiedene Wellenlängen unterschiedlich behandeln) Spiegel oder Dünnschichtpolarisatoren verwendet werden.

Die Absorption in optischen Beschichtungen und Substraten wird hauptsächlich durch die Bandstruktur der Materialien bestimmt. Übliche dielektrische Materialien wie Oxide zeigen Bandlücken von mehr als 3 eV, die Absorptionskanten im Ultravioletten entsprechen. Dadurch kann die Verwendung dielektrischer Beschichtungen zu einer Absorption im ppm-Bereich führen. Defekte in den Schichten, beispielsweise durch Verunreinigungen, können jedoch die Absorption stark beeinträchtigen. Da dielektrische Beschichtungen auf der Optimierung konstruktiver und destruktiver Interferenzen an ihren Grenzflächen basieren, um die Reflexionseigenschaften der Substratoberfläche zu verändern, kann ein wesentlicher Unterschied zwischen antireflektierenden und hochreflektierenden Beschichtungen aufgezeigt werden. Ein typisches transparentes Substrat wie Quarzglas hat einen Reflexionsgrad von etwa 4% bei senkrechtem Einfall. Infolgedessen ist die Anzahl der Interferenzschichten, die benötigt wird, um den Wert unter 0,1% (AR-Beschichtung) zu senken, viel geringer als bei einer Erhöhung über 99,9% (HR-Beschichtung). Während für AR-Beschichtungen 3 bis 5 dielektrische Schichten typisch sind, können für HR-Beschichtungen leicht mehr als 5 Schichten erforderlich sein. Die erhöhte Komplexität von HR-Beschichtungen im Vergleich zu AR-Beschichtungen führt zu einer höheren Wahrscheinlichkeit für Kontaminationen und Strukturfehler, die letztendlich die Absorption bestimmen und die maximale Laserleistung begrenzen. Zudem weisen amorphe dielektrische Materialien eine geringe Wärmeleitfähigkeit (in der Größenordnung von 1 W/(m • K)) auf, was den Wärmetransport begrenzt und zu wärmeinduzierter Strukturschädigung in der Beschichtung und schließlich im Laserbearbeitungskopf führen kann.

Daher sind Spiegelbeschichtungen eine sehr kritische Komponente in einem Laserbearbeitungskopf und können die Laserleistung des Bearbeitungslaserstrahls begrenzen. Insbesondere solche Spiegel, für die aufgrund einer beweglichen, beispielsweise einer drehbaren, Lagerung Kopplung mit einer Wärmesenke erschwert ist bzw. nur eine geringe Kopplung mit einer Wärmesenke ist, leiden unter dem hohen Energieeintrag durch den Bearbeitungslaserstrahl, da die Wärme nicht effizient abgeführt werden kann. Dies kommt vor allem bei verformbaren und/oder beweglichen bzw. beweglich gelagerten Spiegeln zum Tragen, da die Kopplung mit einer Wärmesenke schwieriger ist als bei einem feststehenden Spiegel.

In DE 199 55 574 B4 wird für einen masseoptimierten Spiegel für zwei und dreidimensionale Laser-Oberflächenbearbeitung von Halbzeugen oder Fertigprodukten aus beliebigen Werkstoffen und -kombinationen zur Laserbearbeitung mit Laserleistungen bis zu 20 kW eine zusätzliche mit dem Spiegel gekoppelte Kühleinrichtung bereitgestellt, da aufgrund der auf das Mindestmaß reduzierten Dicke des Spiegels eine Selbstkühlung nicht mehr gewährleistet werden kann.

WO 2005022209 A1 offenbart einen Spiegel für eine Galvo-Ablenkeinheit in einer Laserbearbeitungsanlage. Dieser Spiegel umfasst ein Substrat, das aus einem Diamantmaterial besteht und auch aus kleineren Diamantsegmenten bestehen kann. Das Diamantsubstrat (10) weist eine hohe Steifigkeit bei geringerer Dicke als herkömmliche Spiegelsubstrate auf, wodurch höhere Arbeitsgeschwindigkeiten im Lasersystem ermöglicht werden.

US 7,832,879 B2 beschreibt eine Verbesserung des Wärmemanagements bei verformbaren Spiegeln. Es wird ein verformbarer Spiegel mit einem Wärmeverteiler offenbart, der dazu verwendet wird, um die Wärmeenergie gleichmäßig über den Spiegel zu verteilen. Diamantmaterial ist aufgrund seiner extrem hohen Wärmeleitfähigkeit ein bevorzugter Wärmeverteiler, der eine schnelle und gleichmäßige Verteilung der Wärmeenergie im Spiegel über die gesamte Spiegeloberfläche ermöglicht, wodurch die Lebensdauer des Spiegels erhöht wird.

US 3,731,992 A offenbart einen Flüssigkeitsgekühlten Laserspiegel mit einer Spiegelstruktur und mit einer Abdeckung. Innerhalb der Spiegelstruktur befinden sich mehrere spiralförmige Nuten, während sich innerhalb der Abdeckung Eintritts- und Austrittsöffnungen befinden. Flüssigkeit tritt durch die Einlassöffnungen der Abdeckung ein, zirkuliert durch die spiralförmigen Nuten und tritt durch die Auslassöffnungen der Abdeckung aus, wodurch der Spiegel gekühlt wird.

Nachteilig ist bei den genannten Ansätzen jedoch, dass die Kühlungssysteme aufwendig sind, Raum in der jeweiligen Vorrichtung einnehmen und zu optischen Instabilitäten führen können.

### Zusammenfassung

Es ist Aufgabe der vorliegenden Erfindung, eine Ablenkvorrichtung mit einem Spiegelelement, insbesondere mit einem verformbaren und/oder beweglich gelagertem Spiegelelement, mit verbesserter und effizienterer Wärmeabfuhr, insbesondere in den Spiegelbeschichtungen, sowie einen Laserbearbeitungskopf mit derselben bereitzustellen.

Eine weitere Aufgabe der vorliegenden Erfindung besteht darin, eine Ablenkvorrichtung sowie einen Laserbearbeitungskopf mit derselben bereitzustellen, die dazu ausgelegt ist, einen Bearbeitungslaserstrahl mit hoher Laserleistung, z.B. von mehr als 1 kW, effizient auf ein Werkstück zu führen und/oder abzulenken.

Weiterhin besteht eine Aufgabe darin, eine Ablenkvorrichtung mit verbesserter Wärmeleitfähigkeit sowie einen Laserbearbeitungskopf mit derselben bereitzustellen, die einen einfachen und kompakten Aufbau aufweist.

Eine oder mehrere dieser Aufgaben werden durch die Merkmale der unabhängigen Ansprüche gelöst. Abhängige Ansprüche betreffen bevorzugte und insbesondere hinsichtlich der Aufgaben technisch besonders geeignete Ausführungsformen.

Gemäß einem Aspekt umfasst eine Ablenkvorrichtung für einen Laserbearbeitungskopf zum Ablenken eines Bearbeitungslaserstrahls für die Bearbeitung eines Werkstücks: zumindest ein Spiegelelement, das verformbar ist und/oder beweglich angeordnet ist, um den Bearbeitungslaserstrahl auf verschiedene Positionen auf dem Werkstück zu richten, wobei das Spiegelelement mindestens ein Substrat und mindestens eine auf bzw. über dem Substrat angeordnete reflektierende Multischichtstruktur aufweist, in der eine Mehrzahl von kristallinen ersten Schichten und eine Mehrzahl von kristallinen zweiten Schichten alternierend übereinander angeordnet sind. Die kristallinen ersten und/oder zweiten Schichten können monokristalline Schichten sein. Die kristallinen ersten Schichten weisen jeweils erste Brechungsindizes auf, die in einem ersten Wertebereich liegen. Die kristallinen zweiten Schichten weisen jeweils zweite Brechungsindizes auf, die in einem zweiten Wertebereich liegen. Die ersten Brechungsindizes der ersten Schichten und die zweiten Brechungsindizes der zweiten Schichten sind vorzugsweise voneinander verschieden. Insbesondere kann jeder der ersten Brechungsindizes von jedem der zweiten Brechungsindizes verschieden sein. Mit anderen Worten kann jede erste Schicht einen anderen Brechungsindex aufweisen als irgendeine der zweiten Schichten bzw. jede zweite Schicht kann einen anderen Brechungsindex aufweisen als irgendeine der ersten Schichten. Der erste Wertebereich überschneidet sich vorzugsweise nicht mit dem zweiten Wertebereich. Vorzugsweise sind der erste Wertebereich und der zweite Wertebereich voneinander beabstandet. Der erste Wertebereich kann beispielsweise Brechungsindizes für hochreflektierende Materialien umfassen. Der zweite Wertebereich kann beispielsweise Brechungsindizes für niedrigreflektierende Materialien umfassen.

Kristalline transparente Materialien haben eine hohe Wärmeleitfähigkeit, was die thermische Belastung in der Beschichtung und letztendlich im Laserbearbeitungskopf drastisch reduziert. Speziell monokristalline transparente Materialien weisen höchste Reinheit und Fehlerfreiheit auf, was zu noch geringeren Absorptionswerten führt.

Die Ablenkvorrichtung hat den Vorteil, dass das Spiegelelement zum Ablenken eines Bearbeitungslaserstrahls auch für hohe Laserleistungen des Bearbeitungslasers, beispielsweise von mehr als 1 kW oder sogar mehr als 10 kW, geeignet ist. Der Bearbeitungslaserstrahl kann daher durch die Ablenkvorrichtung abgelenkt werden, ohne dass die Ablenkvorrichtung, insbesondere das Spiegelelement durch den Bearbeitungslaserstrahl beschädigt wird.

Das Spiegelelement weist eine hohe Reflektivität zumindest für einen vorgegebenen Wellenlängenbereich auf und kann daher einen hohen Anteil des einfallenden Lichts bzw. der einfallenden elektromagnetischen Strahlung des Bearbeitungslaserstrahls reflektieren. Aufgrund der minimierten bzw. reduzierten Absorption durch das Spiegelelement erwärmt sich das Spiegelelement kaum oder gar nicht. Dadurch kann auch eine starke Erwärmung des Laserbearbeitungskopfs bzw. von darin angeordneten Elementen weitgehend vermieden werden. Dies führt unter anderem dazu, dass der Bearbeitungslaserstrahl stabil und präzise entlang eines vorgegebenen Bearbeitungspfades oder Wobbelmusters geführt werden kann. Ein weiterer positiver Effekt ist die verlängerte Lebensdauer der Ablenkvorrichtung, da Beschädigungen im Laufe der Verwendung bzw. des Betriebs reduziert werden und sich daher über längere Zeitintervalle nicht zu größeren Beschädigungen oder gar zu einer Zerstörung akkumulieren.

Die Multischichtstruktur kann hochreflektierend sein. Bevorzugt haben die ersten und zweiten Schichten der Multischichtstruktur stark unterschiedliche Brechungsindizes. Die ersten Schichten können beispielsweise hochbrechend und die zweiten Schichten können beispielsweise niederbrechend sein. Anders ausgedrückt, können die ersten Schichten jeweils einen hohen Brechungsindex aufweisen, und die zweiten Schichten können einen vergleichsweise geringen Brechungsindex aufweisen, oder umgekehrt. Vorzugsweise sind der erste Wertebereich der Brechungsindizes der ersten Schichten und der zweite Wertebereich der Brechungsindizes der zweiten Schichten voneinander beabstandet. Ein Abstand zwischen den Wertebereichen kann etwa 0,5 betragen. Bevorzugt liegt der erste Wertebereich der ersten Brechungsindizes etwa zwischen 1,8 und 5,5 und/oder der zweite Wertebereich der zweiten Brechungsindizes etwa zwischen 1,2 und 4,6. Ein besonders hoher Abstand der Wertebereiche der ersten und der zweiten Brechungsindizes ist günstig für die Reflexionseigenschaften der Multischichtstruktur.

Die Ablenkvorrichtung ist insbesondere dazu ausgelegt, den Bearbeitungslaserstrahl auf verschiedene Positionen auf dem Werkstück zu richten bzw. den Bearbeitungslaserstrahl in zumindest einer Richtung, insbesondere in einer Richtung senkrecht zur Strahlausbreitungsrichtung des Bearbeitungslaserstrahls, auf dem Werkstück auszulenken. Die Energiedichte des Bearbeitungslaserstrahls auf dem Werkstück kann dabei einen Wert erreichen, der größer ist als 1 mJ/cm² (Millijoule pro Quadratzentimeter). Die Ablenkvorrichtung eignet sich daher insbesondere zum Laserschneiden, Laserschweißen, Laserlöten und/oder Laserauftragsschweißen.

Das Spiegelelement der Ablenkvorrichtung ist dabei verformbar, beispielsweise reversibel ausdehnbar, und/oder beweglich angeordnet, also z.B. schwenkbar bzw. drehbar und/oder verschiebbar. Der Bearbeitungslaserstrahl kann somit durch das bewegliche und/oder verformbare Spiegelelement auf verschiedene Positionen auf dem Werkstück gerichtet werden, wobei die Auslenkung vorzugsweise senkrecht zur Strahlausbreitungsrichtung erfolgt.

Das Substrat bildet vorzugsweise einen Träger für die Multischichtstruktur. Das Substrat kann zwei sich gegenüberliegende Hauptflächen umfassen, die vorzugsweise zueinander parallele Ebenen bilden. Eine der Hauptflächen kann als eine obere Hauptfläche bezeichnet werden und die andere der Hauptflächen kann als eine untere Hauptfläche bezeichnet werden. Auf der oberen Hauptfläche ist die Multischichtstruktur angeordnet. Die Multischichtstruktur kann durch epitaktisches Wachstum auf einer Basis gebildet worden und auf das Substrat übertragen worden sein. Die untere Hauptfläche ist eine der oberen Hauptfläche und damit der Multischichtstruktur abgewandte Fläche. Alle Schichten der Multischichtstruktur können im Wesentlichen parallele Ebenen zu den beiden Ebenen der Hauptflächen des Substrats bilden. Die ersten und zweiten Schichten können alternierend aufeinander bzw. übereinander angeordnet bzw. in einer Richtung senkrecht zur Substratfläche bzw. Spiegelfläche aufgestapelt sein.

Die Multischichtstruktur kann unmittelbar bzw. direkt, also ohne Zwischenschicht, auf bzw. über dem Substrat angeordnet sein. Die Multischichtstruktur kann alternativ indirekt, also mit einer Zwischenschicht, auf bzw. über dem Substrat angeordnet sein. Die Multischichtstruktur ist reflektierend, insbesondere hochreflektierend. Je höher die Reflexionseigenschaften der Multischichtstruktur sind, desto weniger Verluste gibt es durch Transmission. Daher ist eine besonders hochreflektierende Multischichtstruktur besonders bevorzugt. Dabei gilt, dass je höher Anzahl der kristallinen Schichten ist, desto mehr Licht reflektiert werden kann.

Die Multischichtstruktur umfasst eine Mehrzahl von ersten kristallinen, insbesondere monokristallinen, Schichten mit ersten Brechungsindizes in einem ersten Wertebereich und eine Mehrzahl von zweiten kristallinen, insbesondere monokristallinen, Schichten mit zweiten Brechungsindizes in einem anderen Wertebereich, und zwar in dem zweiten Wertebereich. Mit monokristallin ist gemeint, dass eine Schicht im Wesentlichen und überwiegend nur eine einzige Kristallstruktur aufweist, wobei durchaus kleinere Defekte in der Schicht vorliegen können. Insbesondere liegt bei einer kristallinen Struktur im Wesentlichen keine amorphe Struktur vor. Kristalline bzw. monokristalline Strukturen weisen eine besonders gute Wärmeleitfähigkeit auf. Die kristallinen, insbesondere monokristallinen, ersten und zweiten Schichten können bevorzugt epitaktisch auf einer Halbleiterbasis aufeinander aufgewachsen sein. Die Halbleiterbasis ist in der Regel nicht das Substrat, welches in dem Spiegelelement verwendet wird, sondern ein eigens für das epitaktische Wachstum ausgewählter Halbleiter. Die Multischichtstruktur wird anschließend typischerweise von der Halbleiterbasis gelöst und auf dem Substrat aufgebracht bzw. angeordnet. Es kann alternativ jedoch auch sein, dass die Halbleiterbasis in einigen Fällen das Substrat des Spiegelelements darstellt. Die Halbleiterbasis gibt üblicherweise bei dem epitaktischen Wachstum die Kristallstruktur vor und die Atome, die epitaktisch aufwachsen, folgen dieser Vorgabe und bilden vorzugsweise die monokristalline Schicht aus.

Die ersten und die zweiten Schichten sind insbesondere unmittelbar übereinander angeordnet bzw. aufgewachsen, sodass sie miteinander in Kontakt stehen. Dadurch entsteht eine optische Grenzfläche an der Kontaktstelle zweier Schichten, an der das einfallende Licht von einem optisch dichteren Medium, und zwar der Schicht mit hohem Brechungsindex bzw. hoher Brechzahl in ein optisch dünneres Medium, und zwar in die Schicht mit niedrigem Brechungsindex tritt.

Die Multischichtstruktur kann eine Oberfläche des Spiegelelements bilden. Insbesondere kann eine der ersten oder zweiten Schichten die Oberfläche des Spiegelelements bilden. Mit anderen Worten kann eine der ersten oder zweiten Schichten frei liegen. Es ist also vorzugsweise keine weitere Schicht bzw. kein Element auf der Multischichtstruktur angeordnet.

Bevorzugt ist die (hoch)reflektierende Multischichtstruktur unmittelbar auf dem Substrat angeordnet, insbesondere ohne eine adhäsive (Kopplungs-)Schicht zwischen der Multischichtstruktur und dem Substrat. Die Kopplung der Multischichtstruktur auf dem Substrat kann insbesondere mittels Van der Waals Kräften oder mittels kovalenter Bindungen erfolgen. Die direkte Kopplung der Multischichtstruktur auf dem Substrat erlaubt, auf Zwischenschichten, wie Adhäsions- bzw. Klebstoffschichten, zu verzichten. Solche Zwischenschichten sind schwierig zu reproduzieren, sodass Schwankungen in der Qualität bei der Herstellung solcher Spiegel schwerlich vermieden werden können. Überdies können Zwischenschichten optische Eigenschaften des Spiegels beeinflussen oder die Abfuhr von Wärme behindern. Die Multischichtstruktur ist also vorzugsweise mit dem Substrat ohne Kleb-/Lötstoffe bzw. Zwischenschichten optisch verbunden.

Die ersten Brechungsindizes von mindestens zwei oder allen der ersten Schichten können im Wesentlichen gleich sein. Mindestens zwei oder alle der ersten Schichten können im Wesentlichen aus demselben Material bestehen. Mindestens zwei oder alle der ersten Schichten können im Wesentlichen gleiche Schichtdicken aufweisen. Die ersten Schichten können zueinander ähnliche Brechungsindizes aufweisen. Die ersten Schichten können auch als Schichten des ersten Typs bezeichnet werden.

Die zweiten Brechungsindizes von mindestens zwei oder allen der zweiten Schichten können im Wesentlichen gleich. Mindestens zwei oder alle der zweiten Schichten können im Wesentlichen aus demselben Material bestehen. Mindestens zwei oder alle der zweiten Schichten können im Wesentlichen gleiche Schichtdicken aufweisen. Die zweiten Schichten können zueinander ähnliche Brechungsindizes aufweisen. Die zweiten Schichten können als Schichten des zweiten Typs bezeichnet werden.

Schichten desselben Typs, also erste Schichten oder zweite Schichten, die jeweils untereinander gleiche bzw. ähnliche Brechungsindizes und/oder Materialien und/oder Schichtdicken aufweisen, sind einfach herzustellen. Die exakten Parameter für Brechungsindizes und/oder Materialien und/oder Schichtdicken können durch Softwareprogramme für optische Anordnungen ermittelt bzw. simuliert werden. Um eine erwünschte Reflektivität zu erzielen, können Brechungsindizes, Materialzusammensetzungen und Schichtdicken für die Schichten eines Typs auch leicht variieren, solange die Brechungsindizes der Schichten des ersten Typs einander ähneln und die Brechungsindizes der Schichten des zweiten Typs einander ähneln und die Differenz des Wertebereichs bzw. Varianzbereich der Brechungsindizes des ersten Typs und des Wertebereich bzw. Varianzbereich der Brechungsindizes des zweiten Typs groß genug ist.

Bevorzugt umfasst das Substrat zumindest eines der folgenden Materialien: Silizium Si, Quarzglas SiO₂, Aluminiumoxid Al₂O₃, Saphir, Diamant und Siliziumkarbid (SiC). Insbesondere besteht das Substrat aus einem dieser Materialien. Die Substratschichtdicke kann zwischen etwa 1 mm und 15 mm liegen. Das Substrat kann transparent sein bzw. aus transparentem Material bestehen.

Substrate mit hoher Wärmeleitfähigkeit wie Saphir oder Siliziumkarbid sind besonders geeignet, da sie dazu beitragen, dass Wärme besonders effizient abgeführt werden kann. Alle der genannten Materialien eignen sich insbesondere für die Ankopplung bzw. Anbindung der Multireflexschicht auf dem Substrat mittels kovalenter Bindungen oder Van der Waals Kräfte. Überdies lassen sich die Materialien sehr gut bearbeiten und sehr glatte Flächen mit niedriger RMS Rauigkeit können für die optimale Anbindung der Multireflexschicht bereitgestellt werden. Auch die optischen Eigenschaften dieser Materialien sind wohl bekannt und besonders geeignet für die Verwendung der üblichen Bearbeitungslaser. Insbesondere eignen sich solche Substrate, die auch die genannten Materialien umfassen und die für einen vorbestimmten Wellenlängenbereich transparent sind und/oder ähnliche Ausdehnungskoeffizienten wie die Multischichtstruktur aufweisen, um Spannungen in Spiegelelement zu verhindern.

Bevorzugt bestehen die ersten Schichten und/oder die zweiten Schichten aus einem Halbleiter und/oder weisen zumindest eines der folgenden Materialien auf: binäre und/oder ternäre und/oder quaternäre Verbindungen von III-V-Halbleiter und/oder II-VI-Halbleiter und/oder Aluminium-Gallium-Arsenid AlₓGa₁As mit einen variablen Aluminiumanteil.

Die genannten Materialien lassen sich besonders gut epitaktisch in gestapelten kristallinen Schichten auf einer Basis aufwachsen, sodass eine kristalline Multischichtstruktur entsteht. Die Reinheit des Materials führt zu einem Wachstum homogener Kristalle, die besonders geeignet sind, Wärme zu leiten und entsprechend abzuführen.

Die ersten und/oder zweiten Schichten können Aluminium-Gallium-Arsenid, also AlₓGa₁₋ₓAs aufweisen, wobei 0<x<1. Dabei kann x für die Schicht des einen Typs kleiner sein als für die Schicht des anderen Typs. Beispielsweise kann x für die ersten Schichten kleiner als für die zweiten Schichten sein. Ein hohes x führt zu einem niedrigen Brechungsindex. Der variable Anteil von Aluminium in der ersten und/oder in der zweiten Schicht sorgt für hohe Reflexionseigenschaften. Je höher die Unterschiede der Aluminiumanteile in den Schichten der beiden Typen, desto höher kann die Reflektivität der Multischichtstruktur sein. Durch eine hohe Differenz dieser Al-Anteile kann daher eine geringere Anzahl von Schichten erforderlich sein, um eine hohe Reflektivität zu erzielen.

Die Multischichtstruktur kann eine Wärmeleitfähigkeit von mehr als 5 W/mK und/oder eine Absorption bei einer Bearbeitungslaserwellenlänge von kleiner bzw. weniger als 10 ppm aufweisen.

Eine Wärmeleitfähigkeit von mehr als 5 W/mK und/oder eine Absorption, z.B. bei einer Wellenlänge des Bearbeitungslasers, von kleiner als 10 ppm eignet/eignen sich gut bei der Verwendung von Hochleistungslasern, da die ggf. entstehende Wärme, die trotz hoher Reflexionseigenschaften der Multischichtstruktur bzw. der Multischichtlagen nicht verhindert werden kann, effizient abgeführt werden kann.

Zumindest eine der zweiten Schichten, die bevorzugt monokristallin ist, kann epitaktisch auf einer der ersten Schichten, die auch bevorzugt monokristallin ist, aufgewachsen sein. Insbesondere ist zumindest eine der ersten Schichten epitaktisch auf einer der zweiten Schichten aufgewachsen und/oder umgekehrt. Bevorzugt sind alle der ersten und zweiten Schichten epitaktisch aufeinander aufgewachsen.

Das epitaktische Aufwachsen kann dabei mittels zumindest einem der folgenden Verfahren erfolgen: molecular beam epitaxy (MBE), metalorganic vapor phase epitaxy (MOVPE), liquid phase epitaxy (LPE) und jedes andere Verfahren, das sich dazu eignet. Für epitaktisches Wachstum von Schichten auf einer Basis eignen sich für die Basis beispielsweise folgende Materialien, insbesondere mit einer hohen Reinheit: GaAs, Ge, InP, GaN/AlN. Nach dem Aufwachsen der epitaktischen Schichten auf die Basis und der Bildung der Multischichtstruktur kann das Abtragen bzw. Ablösen der Multischichtstruktur von der Basis und der Transfer der Multischichtstruktur auf das Substrat erfolgen. Dazu können beispielsweise folgende Verfahren verwendet werden: wet coating, dip coating, spin coating, etc. Anschließend kann ein Schritt eines Erhitzens bzw. Tempern der Multischichtstruktur erfolgen.

Der große Vorteil dieses Konzepts besteht darin, dass die Halbleiterfertigung eine ausgereifte Technologie ist, bei der das epitaktische Wachstum von Kristallen eine Routineaufgabe ist, die zu mehrschichtigen Stapeln mit höchster Reinheit und frei von Strukturfehlern führt. Die richtige Wahl der Halbleitermaterialien und des Stapeldesigns ermöglichen die Herstellung von Beschichtungen mit der notwendigen geringen Absorption im ppm-Bereich. Insbesondere kann die Absorption kristalliner hochreflektierender Beschichtung für die Wellenlänge des Bearbeitungslaserstrahls unter 10 ppm liegen. Die kristalline bzw. monokristalline Struktur der Schichten führt zu wesentlich höheren Wärmeleitfähigkeiten im Vergleich zu dielektrischen Materialien. Insbesondere kann die Wärmeleitfähigkeit der kristallinen hochreflektierenden Beschichtung mehr als 5 W/mK betragen. Da epitaktisches Wachstum in der Regel auf Halbleitern als Basis erfolgt, können Techniken angewandt werden, um die eigentliche Spiegelstruktur, d.h. die Multischichtstruktur, von der Basis zu entfernen und sie mit dem Substrat, wie zum Beispiel mit einem Quarzglas-Substrat, zu verbinden.

Bevorzugt umfasst die Multischichtstruktur mehr als 5, insbesondere mehr als 10 und bevorzugt mehr als 20 erste und zweite Schichten, z.B. mehr als 10 Paare aus einer der ersten und einer der zweiten Schichten. Die Multischichtstruktur kann eine Gesamtdicke von mehr als etwa 0,5 µm, insbesondere von mehr als 1 µm, bevorzugt von mehr als 5 µm auf. Die Schichtdicken der ersten und/oder zweiten Schichten können mehrere Nanometer betragen und insbesondere zwischen etwa 20 nm und etwa 200 nm liegen. Die Schichtdicke jeder einzelnen Schicht kann insbesondere etwa 50 nm betragen.

Je mehr Schichten in der Multischichtstruktur vorliegen, desto höhere Werte können für die Reflektivität erreicht werden, d.h. desto höher ist der Reflexionsgrad. Daher ist eine Anzahl von mehr als 5 Schichten besonders vorteilhaft, um einen Spiegel mit einer hohen Reflektivität erzeugen zu können. Beispielsweise können zwischen 100 and 120 Schichten in der Multischichtstruktur vorliegen.

Bevorzugt ist die Multischichtstruktur darauf ausgelegt, einen maximalen Anteil einer einfallenden elektromagnetischen Strahlung in einem vorbestimmten Wellenlängenbereich zu reflektieren. Die Multischichtstruktur kann eine Absorption in zumindest einem vorbestimmten Wellenlängenbereich von weniger als etwa 50 - 100 ppm, insbesondere weniger als etwa 10 ppm und bevorzugt weniger als etwa 1 ppm aufweisen.

In dem Fall, in dem ein maximal möglicher Anteil des einfallenden Lichtes eines Bearbeitungslaserstrahls reflektiert werden kann, wird der absorbierte Anteil des einfallenden Lichtes reduziert, um insbesondere weniger als etwa 50 - 100 ppm zu erreichen, sodass infolgedessen der Wärmeeintrag reduziert werden kann.

Die Multischichtstruktur kann eine Reflektivität in zumindest einem vorbestimmten Wellenlängenbereich von mindestens etwa 99,0 %, bevorzugt von mindestens etwa 99,5 % und besonders bevorzugt von mindestens etwa 99,9 %, insbesondere etwa 99.99% aufweisen.

Der zumindest eine vorbestimmte Wellenlängenbereich kann zumindest einem Teilbereich zwischen etwa 900 nm und 1100 nm und/oder zwischen etwa 450 nm und 750 nm entsprechen. Der vorbestimmte Wellenlängenbereich kann einem Bereich einer Bearbeitungslaserwellenlänge ± 25 nm, vorzugsweise ± 10 nm, entsprechen. Diese Wellenlängenbereiche entsprechen üblichen Wellenlängenbereichen von Bearbeitungslasern.

Das Spiegelelement kann ferner mindestens eine zusätzliche Spiegelbeschichtung umfassen. Mit anderen Worten kann das Substrat zumindest einseitig beschichtet sein bzw. auf zumindest einer Seite bzw. Fläche eine zusätzliche Spiegelbeschichtung aufweisen. Dadurch kann das Reflexionsvermögen des Spiegelelements für mindestens eine weitere Wellenlänge optimiert werden, wenn die Multischichtstruktur auf maximale Reflektivität und/oder minimale Absorption für die Wellenlänge des Bearbeitungslaserstrahls optimiert ist. Die mindestens eine Spiegelbeschichtung kann mindestens eine dielektrische und/oder mindestens eine metallische Schicht umfassen. Die mindestens eine Spiegelbeschichtung kann beispielsweise aus mindestens einer Metallschicht, aus Gold, und mindestens einer dielektrische Schicht aus SiO₂, bestehen. Die Spiegelbeschichtung kann beispielsweise aus genau einer Metallschicht, aus Gold, und genau einer dielektrischen Schicht aus SiO₂, bestehen. Diese letzte Schicht dient teilweise auch als Schutzschicht für diese empfindliche Metallschichten. Die mindestens eine Spiegelbeschichtung kann zwischen der Multischichtstruktur und dem Substrat und/oder auf einer Fläche des Substrats, die der Multischichtstruktur abgewandt ist, angeordnet sein. Vorzugsweise ist die mindestens eine Spiegelbeschichtung für einen anderen Wellenlängenbereich reflektierend als die Multischichtstruktur. Beispielsweise kann die mindestens eine Spiegelbeschichtung (vor allem) für einen Wellenlängenbereich eines Pilotlasers und/oder für einen Wellenlängenbereich von einer für die Prozessbeobachtung zu erfassende Prozessstrahlung reflektierend sein, während die Multischichtstruktur (vor allem) für den Wellenlängenbereich des Bearbeitungslasers reflektierend sein kann.

Die dielektrische und/oder die metallische Spiegelbeschichtung kann eine elektromagnetische Strahlung in einem Wellenlängenbereich, welche durch die Multischichtstruktur nicht oder nicht vollständig reflektiert wird, zumindest teilweise reflektieren. Insbesondere kann einfallendes Licht solcher Wellenlängen durch die zusätzliche(n) Spiegelbeschichtung(n) reflektiert werden, für die die Multischichtstruktur keine hochreflektierenden Eigenschaften aufweist. Dies führt dazu, dass ein Spiegelelement bereitgestellt werden kann, das Licht in einem breiten Wellenlängenspektrum reflektieren kann. Insbesondere soll ein möglichst breites Spektrum im sichtbaren und im Infrarotbereich, insbesondere im Nahinfrarotbereich reflektiert werden, um einen Wärmeeintrag zu vermindern. Die Reflektivität des gesamten Spiegelelements kann über einen großen Wellenlängenbereich, insbesondere von etwa 400 nm bis etwa 1200nm verbessert werden. Die Bereiche der Wellenlängen, bei denen die Multischichtstruktur hohe reflektive Eigenschaften bzw. Reflexionseigenschaften aufweist und die Bereiche der Wellenlängen, bei denen die Spiegelbeschichtung(en) reflektive oder gar hohe reflektive Eigenschaften aufweist/aufweisen können einander überlappen.

Die Spiegelbeschichtung kann zwischen der untersten Lage der Multischichtstruktur und dem Substrat, z.B. der oberen Hauptoberfläche des Substrats, angeordnet sein, und/oder auf der unteren Hauptoberfläche des Substrats. Die Spiegelbeschichtung kann beispielsweise mittels thermischen Aufdampfens (thermal vapor deposition), Sputtern, spin coating, dip coating, epitaktischem Wachstum oder anderen Verfahren, die sich dazu eignen, auf dem Substrat aufgebracht werden. Metallische Materialien, die sich für zusätzliche Spiegelbeschichtungen eignen, sind beispielsweise Gold, Silber, Aluminium. Dielektrische Materialien, die sich für zusätzliche Spiegelbeschichtungen eignen, sind beispielsweise Oxide, wie z.B. SiO₂, TiO₂, HfO₂, Al₂O₃. Die Schichtdicke einer solchen Spiegelbeschichtung kann zwischen etwa 20 nm und etwa 2000 nm liegen.

Die Ablenkvorrichtung umfasst vorzugsweise zumindest eine Antriebvorrichtung, die dazu ausgelegt ist, das zumindest eine Spiegelelement zu verformen, um mindestens eine Achse zu drehen und/oder lateral zu verschieben bzw. zu versetzen. Dabei kann das Spiegelelement an einer Aufhängung angeordnet sein, welche an die Ablenkvorrichtung gekoppelt ist. Ein Abführen von Wärme kann zumindest teilweise durch die Aufhängung des Spiegelelements an eine Wärmesenke, beispielsweise an ein Metallteil erfolgen. Die Antriebvorrichtung kann zumindest einen Aktuator, einen piezoelektrischen Aktuator, einen Schwingspulenaktuator, einen Galvo-Aktuator und/oder ein Mikro-Elektromechanisches System (MEMS), umfassen. Die Ablenkvorrichtung kann ein Galvoscanner bzw. ein Spiegelscanner mit dem zumindest einen Spiegelelement sein, um den Bearbeitungslaserstrahl in zwei aufeinander senkrecht stehende Richtungen auf dem Werkstück auszulenken. Das zumindest eine Spiegelelement kann um mindestens eine Achse drehbar sein, vorzugsweise um zwei aufeinander in einem Winkel stehende Achsen. Vorzugsweise umfasst die Ablenkvorrichtung zumindest zwei Spiegelelemente. Den Spiegelelementen kann jeweils eine eigene Antriebvorrichtung zugeordnet sein.

Das Spiegelelement kann zumindest teilweise reversibel verformbar sein, sodass ein Aktuator, der dazu ausgelegt ist, das Spiegelelement zu verformen, dieses nicht zerstört. Die Ablenkvorrichtung kann daher einen Scanner eines Laserbearbeitungskopfes oder zumindest einen Teil des Scanners darstellen. Die Antriebvorrichtung ist dazu ausgelegt, den Bearbeitungslaserstrahl auf unterschiedliche Positionen, insbesondere entlang eines vorbestimmten Pfades auf ein Werkstück abzulenken und beispielsweise eine Oberfläche oder den Pfad auf dem Werkstück abzuscannen.

Gemäß einem weiteren Aspekt ist ein Laserbearbeitungskopf für die Bearbeitung eines Werkstücks angegeben, der die Ablenkvorrichtung gemäß einer der hierin beschriebenen Ausführungsformen umfasst.

Gemäß einem weiteren Aspekt umfasst ein Laserbearbeitungskopf für die Bearbeitung eines Werkstücks eine Einkoppelvorrichtung zum Einkoppeln eines Bearbeitungslaserstrahls in einen Strahlengang des Laserbearbeitungskopfes und mindestens eine Linse oder ein Linsensystem zum Fokussieren des Bearbeitungslaserstrahls auf das Werkstück sowie mindestens ein Spiegelelement zum Ablenken des Bearbeitungslaserstrahls. Das Spiegelelement umfasst mindestens ein Substrat und mindestens eine auf dem Substrat angeordnete reflektierende Multischichtstruktur, in der eine Mehrzahl von kristallinen ersten Schichten mit ersten Brechungsindizes in einem ersten Wertebereich und eine Mehrzahl von kristallinen zweiten Schichten mit zweiten Brechungsindizes in einem zweiten Wertebereich alternierend übereinander bzw. aufeinander angeordnet sind. Die ersten Brechungsindizes der ersten Schichten und die zweiten Brechungsindizes der zweiten Schichten sind vorzugsweise voneinander verschieden. Insbesondere kann jeder der ersten Brechungsindizes von jedem der zweiten Brechungsindizes verschieden sein. Mit anderen Worten kann jede erste Schicht einen anderen Brechungsindex aufweisen als irgendeine der zweiten Schichten bzw. jede zweite Schicht kann einen anderen Brechungsindex aufweisen als irgendeine der ersten Schichten. Vorzugsweise überschneidet sich der erste Wertebereich nicht mit dem zweiten Wertebereich. Mit anderen Worten können der erste und zweite Wertebereich voneinander beabstandet sein.

Die Einkoppelvorrichtung kann beispielsweise ein Faserkoppler sein, um eine Laserleitfaser an den Laserbearbeitungskopf zu koppeln.

Das Spiegelelement kann beweglich angeordnet und/oder verformbar sein, um mit dem Bearbeitungslaserstrahl einen vorbestimmten Pfad auf dem Werkstück abzufahren und/oder abzuscannen. Eine Oberfläche der Multischichtstruktur kann frei zugänglich bzw. unbedeckt im Laserbearbeitungskopf angeordnet sein. Mit anderen Worten kann das Spiegelelement so konfiguriert bzw. angeordnet sein, dass der Bearbeitungslaserstrahl direkt auf eine Oberfläche der Multischichtstruktur bzw. auf eine der ersten oder zweiten Schichten einfällt bzw. trifft.

Bevorzugt umfasst der Laserbearbeitungskopf die Ablenkvorrichtung nach einer beschriebenen Ausführungsform, wobei das zumindest eine Spiegelelement des Laserbearbeitungskopfes das zumindest eine Spiegelelement der Ablenkvorrichtung ist.

Die Antriebvorrichtung kann einen Aktuator, insbesondere einen piezoelektrischen Aktuator, Galvo-Aktuator bzw. Galvo-Scanner, einen Schwingspulenaktuator und/oder ein Mikro-Elektromechanisches System, MEMS, umfassen. Das Spiegelelement kann einen Galvo-Spiegel umfassen bzw. sein.

Als Bearbeitungslaser können insbesondere Faserlaser verwendet werden. Die Wellenlänge von typischen Bearbeitungslasern liegt etwa bei 1 µm. Der Faserdurchmesser kann etwa 100 µm sein. Die Laserleistung kann insbesondere mehr als 1 kW sein.

Alle beschriebenen Ausführungsformen der Ablenkvorrichtung sind mit dem Laserbearbeitungskopf kombinierbar bzw. in diesen implementierbar. Alle beschriebenen Vorteile, die sich für die Ausführungsformen der Ablenkvorrichtung ergeben treffen auch insbesondere für den Laserbearbeitungskopf zu, wenn diese Ausführungsformen darin implementiert sind.

### Kurzbeschreibung der Zeichnungen

Die Erfindung wird im Folgenden anhand der Zeichnungen im Detail beschrieben.
Fig. 1 ist eine schematische Darstellung eines Spiegelelements mit reflektierender Multischichtstruktur gemäß einer Ausführungsform;
Fig. 2 ist eine schematische Darstellung eines Spiegelelements mit reflektierender Multischichtstruktur gemäß einer weiteren Ausführungsform; und
Fig. 3 ist eine schematische Darstellung eines Laserbearbeitungskopfes umfassend ein Spiegelelement mit reflektierender Multischichtstruktur gemäß einer Ausführungsform.

### Detaillierte Beschreibung der Zeichnungen

Nachfolgend bezeichnen dieselben Bezugszeichen gleiche oder gleichwirkende Elemente und auf eine wiederholende und daher redundante Beschreibung dieser Elemente wurde verzichtet.

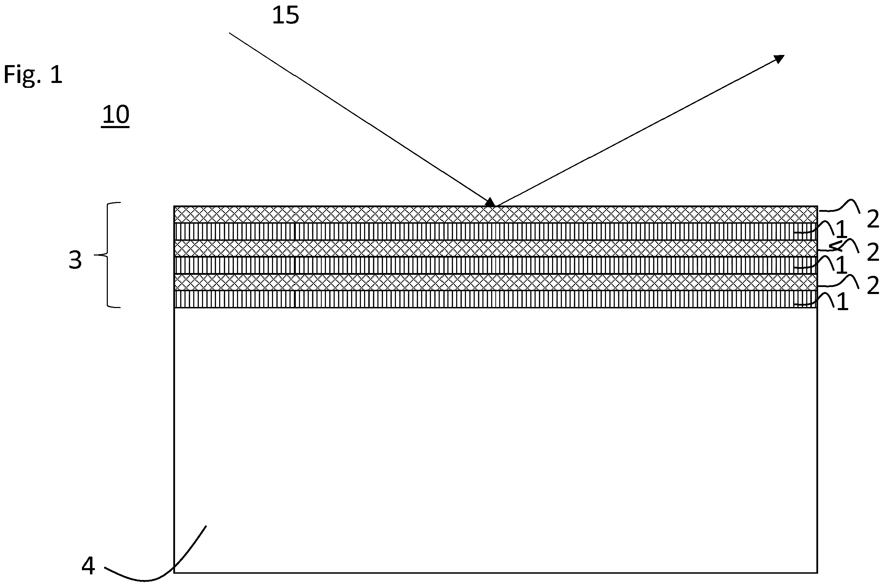

Fig. 1 ist eine schematische Darstellung eines Spiegelelements 10 mit reflektierender Multischichtstruktur 3 gemäß einer Ausführungsform. Ein Substrat 4 bildet den Träger für die Multischichtstruktur 3, welche unmittelbar auf dem Substrat 4 aufgebracht ist. Das Substrat 4 kann insbesondere Quarzglas, Saphir oder Siliziumcarbid umfassen und insbesondere gänzlich daraus bestehen. Die Multischichtstruktur 3 hat in diesem Beispiel insgesamt sechs Schichten bestehend aus einer Mehrzahl von ersten Schichten 1, also Schichten 1 des ersten Typs und einer Mehrzahl von zweiten Schichten 2, also Schichten 2 des zweiten Typs. In Fig. 1 sind jeweils nur drei erste Schichten 1 und drei zweite Schichten 2 dargestellt, also drei Paare von Schichten 1, 2 des ersten und des zweiten Typs. Vorzugsweise liegen jedoch insgesamt mindestens zwanzig Schichten, also mindestens zehn Paare von Schichten 1, 2 des ersten und des zweiten Typs vor. Die Oberfläche der Multischichtstruktur 3 liegt frei, sodass ein Bearbeitungslaserstrahl 15 direkt auf eine der ersten oder zweiten Schichten 1, 2 trifft. Der Vollständigkeit halber wird angemerkt, dass in Fig. 1 die Reflexion des Bearbeitungslaserstrahls 15 an der Multischichtstruktur 3 lediglich schematisch dargestellt ist. Selbstverständlich trägt nicht nur die oberste Schicht der Multischichtstruktur 3 zur Reflexion bei, sondern auch die darunter liegenden Schichten 1, 2.

Die ersten Schichten 1 können beispielsweise hochbrechende Schichten, also Schichten mit einem hohen Brechungsindex oder hohen Brechungsindizes sein und die zweiten Schichten 2 können Schichten mit einem niedrigen Brechungsindex oder niedrigen Brechungsindizes sein. Die relativen Begriffe hoch und niedrig richten sich dabei nach dem Vergleich zwischen den schichtend es ersten Typs und den Schichten des zweiten Typs. Die ersten Schichten 1 haben daher jeweils einen Brechungsindex, der höher ist als der Brechungsindex oder die Brechungsindizes der zweiten Schichten 2. Es kann natürlich auch umgekehrt sein, sodass die ersten Schichten 1 jeweils einen Brechungsindex aufweisen, der geringer ist als der der zweiten Schichten 2. Die ersten und zweiten Schichten 1, 2 sind bevorzugt jeweils monokristalline Halbleiterschichten.

Die Seite, auf der die Multischichtstruktur 3 angeordnet ist, ist in der bestimmungsgemäßen Verwendung des Spiegelelements 10 die Seite des Lichteinfalls. Der Bearbeitungslaserstrahl 15 trifft also "von oben" auf die Multischichtstruktur 3, tritt also nicht zunächst durch das Substrat 4 hindurch. Wie oben erklärt ist in Fig. 1 der Verlauf des Bearbeitungslaserstrahls 15 lediglich schematisch dargestellt. Es wird jedoch nicht dargestellt, wie der Verlauf des Bearbeitungslaserstrahls 15 unter Brechung bzw. Reflexion an den einzelnen Schichten 1, 2 durch die Multischichtstruktur 3 im Detail erfolgt.

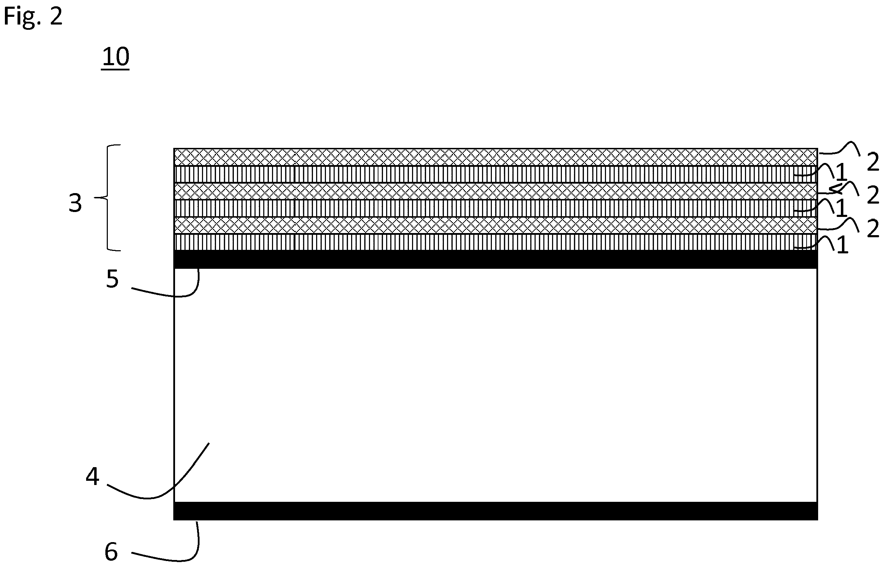

Fig. 2 ist eine schematische Darstellung eines Spiegelelements 10 mit reflektierender Multischichtstruktur 3 gemäß einer weiteren Ausführungsform. Das Spiegelelement 10 weist eine Spiegelbeschichtung 5 zwischen der Multischichtstruktur 3 und dem Substrat 4 auf. Ferner weist das Spiegelelement 10 eine Spiegelbeschichtung 6 auf der Substrat-Rückseite, also der Rückseite des Substrats 4 auf. Die Rückseite bzw. Substrat-Rückseite ist dadurch gekennzeichnet, dass sie eine untere Hauptfläche, also eine der Multischichtstruktur 3 abgewandte Fläche, des Substrats 4 bildet. Im Übrigen entsprechen sich die anderen Elemente denen, die in Fig. 1 gezeigt sind. Also gleicht das Spiegelelement 10 der Fig. 1 dem Spiegelelement 10 der Fig. 2 bis auf die zusätzlichen Spiegelbeschichtungen 5, 6. Weitere alternative Ausführungsformen, die hier nicht explizit gezeigt sind, weisen lediglich eine der beiden Spiegelbeschichtungen 5, 6 auf.

Die Spiegelbeschichtung 5 und/oder die Spiegelbeschichtung 6 kann eine dielektrische und/oder eine metallische Schicht umfassen. Insbesondere kommen Materialien, wie Silber, Gold, Aluminium, Siliziumoxid oder andere Oxide in Frage. Die Spiegelbeschichtung 5 und/oder die Spiegelbeschichtung 6 kann bevorzugt für einen anderen Wellenlängenbereich als die Multischichtstruktur 3 reflektierend sein. Wenn die Multischichtstruktur 3 für einen vorbestimmten Wellenlängenbereich reflektierend ist, dann kann es sein, dass sie für einen anderen Wellenlängenbereich wiederum transparent oder nur ungenügend reflektierend ist. Um jedoch auch Strahlung anderer Wellenlängenbereiche ausreichend zu reflektieren, kann zumindest eine dieser Spiegelbeschichtungen 5, 6, wie in Fig. 2 gezeigt, in dem Spiegelelement 10 angeordnet sein. Das Substrat 4 ist dabei in der Regel und im Wesentlichen für eine Vielzahl von Wellenlängenbereichen transparent. Dies hat den Vorteil, dass elektromagnetische Strahlung mit dem Spiegelelement 10 von Fig. 2 im Vergleich zum Spiegelelement 10 von Fig. 1 besonders breitbandig reflektiert wird und gleichzeitig der Wärmeeintrag in das Spiegelelement in beiden Fällen ähnlich ist.

Die Spiegelbeschichtungen 5 und/oder 6 können insbesondere durch Aufdampfen, Sputtern oder andere bekannte Coating-Verfahren (thin film coating) auf dem Substrat 4 aufgebracht werden. Es kann ferner eine Zwischenschicht zwischen dem Substrat 4 und der jeweiligen Spiegelbeschichtung 5, 6 zur Verbesserung der Adhäsionseigenschaften aufgebracht sein.

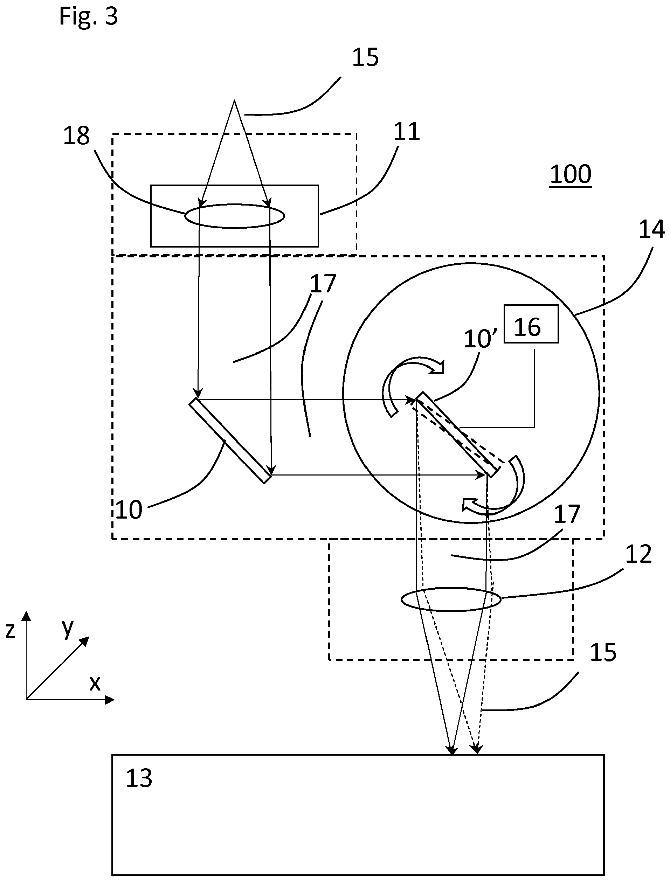

Fig. 3 ist eine schematische Darstellung eines Laserbearbeitungskopfes 100 umfassend ein Spiegelelement 10 mit reflektierender Multischichtstruktur 3 gemäß einer Ausführungsform.

Der Laserbearbeitungskopf 100 definiert einen Strahlengang 17, den der Bearbeitungslaserstrahl 15 entlang der angedeuteten Pfeilrichtung durchläuft. Der Laserbearbeitungskopf 100 umfasst eine Einkoppelvorrichtung 11, wie beispielsweise einen Faserkoppler, eine Linse 18 zum Kollimieren des Bearbeitungslaserstrahl 15 und eine Fokussieroptik 12, insbesondere eine Linse zum Fokussieren des Bearbeitungslaserstrahl 15 auf ein Werkstück 13.

Der Bearbeitungslaserstrahl 15 kann zum Beispiel durch einen Faserlaser bereitgestellt werden, wobei die Wellenlänge beispielsweise etwa 1 µm, der Faserdurchmesser etwa 100 µm, und die Laserleistung größer als 1 kW ist. Der Laserbearbeitungskopf 100 umfasst zwei Spiegelelemente 10, 10', wovon vorliegend das zweite Spiegelelement 10' beweglich ist. Das erste Spiegelelement 10, auf das der Bearbeitungslaserstrahl 15 im Strahlengang 17 trifft, ist in Fig. 3 feststehend bzw. stationär im Strahlengang 17 angeordnet. Alternativ kann auch das erste Spiegelelement 10 beweglich sein, z.B. in eine der Raumrichtungen x, y, z verschiebbar oder um mindestens eine Achse drehbar gelagert sein. Das zweite Spiegelelement 10', auf das der Bearbeitungslaserstrahl 15 im Strahlengang 17 trifft, ist um mindestens eine Achse drehbar gelagert, vorzugsweise um zwei in einem Winkel zueinander angeordneten Achsen, was durch die beiden gebogenen Pfeile angedeutet ist. Das zweite Spiegelelement 10' kann aber beispielsweise auch linear in eine der Raumrichtungen x, y, z verschiebbar sein. Die bewegliche Lagerung der Spiegelelemente 10, 10' dient zum Versatz des Bearbeitungslaserstrahls 15 auf dem Werkstück 13, sodass beispielsweise ein vorbestimmter Weg bzw. Pfad auf dem Werkstück 13 abgescannt werden kann.

In der in Fig. 3 dargestellten Ausführungsform ist das zweite Spiegelelement 10', das drehbar gelagert ist, Teil einer Ablenkvorrichtung 14 zum Auslenken des Laserstrahls 15 auf dem Werkstück 13. Die Ablenkvorrichtung 14 kann auch als Scanvorrichtung bzw. Scanner bezeichnet werden. Die Ablenkvorrichtung 14 umfasst ferner eine Antriebvorrichtung 16, die eingerichtet ist, eines der beiden Spiegelelemente 10, 10' oder beide Spiegelelemente 10, 10' zu bewegen oder zu verformen. Die Antriebvorrichtung 16 ist gemäß der in Fig. 3 dargestellten Ausführungsform dazu ausgelegt, das damit verbundene zweite Spiegelelement 10' um mindestens eine Achse zu drehen bzw. zu schwenken. Die Antriebvorrichtung 16 kann beispielsweise ein Aktuator sein, der die relative Fokuslage des Bearbeitungslaserstrahl 15 variieren kann. Der mindestens eine Aktuator kann die Fokuslage in mindestens eine der in Fig. 3 mit Pfeilen angedeuteten Raumrichtungen x, y, z variieren. Die Ablenkvorrichtung 14 mit den Aktuatoren kann beispielsweise Galvospiegel, Piezos, MEMS-Elemente mit Halbleitersubstraten und/oder Schwingspulenaktuatoren umfassen. Die Aktuatoren können die Spiegelelemente 10 bewegen, also verschieben und/oder drehen, oder im Falle von verformbaren Spiegelelementen 10 deformieren.

Durch die Verwendung von kristallinen hochreflektierenden Beschichtungen auf Spiegelelementen einer Ablenkvorrichtung gemäß der vorliegenden Erfindung wird ein Wärmetransport auf den Spiegelbeschichtungen erhöht. Gemäß der vorliegenden Erfindung wird also eine Ablenkvorrichtung zum Ablenken bzw. Führen eines Bearbeitungslaserstrahls mit zumindest einem verformbaren oder beweglichen Spiegelelement bzw. ein Laserbearbeitungskopf zur Materialbearbeitung mit derselben angegeben, die die Materialbearbeitung bei hoher Laserleistung ermöglicht - ohne zusätzliche Kühlvorrichtungen oder Kühlmaßnahmen.

### Bezugszeichenliste

- 1: erste Schichte(n)
- 2: zweite Schichte(n)
- 3: Multi schichtstruktur
- 4: Substrat
- 5: Spiegelbeschichtung zwischen der Multischichtstruktur und dem Substrat
- 6: Spiegelbeschichtung auf der Substrat-Rückseite
- 10: Spiegelelement
- 11: Einkoppelvorrichtung
- 12: Fokussierlinse
- 13: Werkstück
- 14: Ablenkvorrichtung
- 15: Bearbeitungslaserstrahl
- 16: Antriebvorrichtung
- 17: Strahlengang
- 18: Kollimationslinse oder Kollimationslinsensystem
- 100: Laserbearbeitungskopf

## Patentansprüche

1. Ablenkvorrichtung (14) für einen Laserbearbeitungskopf (100) zum Ablenken eines Bearbeitungslaserstrahls (15) für die Bearbeitung eines Werkstücks (13), wobei die Ablenkvorrichtung (14) umfasst:
zumindest ein Spiegelelement (10), das verformbar ist und/oder beweglich angeordnet ist, um den Bearbeitungslaserstrahl (15) auf verschiedene Positionen auf dem Werkstück (13) zu richten,
wobei das Spiegelelement (10) mindestens ein Substrat (4) und mindestens eine auf dem Substrat (4) angeordnete reflektierende Multischichtstruktur (3) aufweist, in der eine Mehrzahl von kristallinen ersten Schichten (1) mit ersten Brechungsindizes in einem ersten Wertebereich und eine Mehrzahl von kristallinen zweiten Schichten (2) mit zweiten Brechungsindizes in einem zweiten Wertebereich alternierend übereinander angeordnet sind, und
wobei die ersten Brechungsindizes der kristallinen ersten Schichten (1) und die zweiten Brechungsindizes der kristallinen zweiten Schichten (2) voneinander verschieden sind.

2. Ablenkvorrichtung (14) gemäß Anspruch 1, wobei die reflektierende Multischichtstruktur (3) unmittelbar auf dem Substrat (4) angeordnet ist und/oder wobei die reflektierende Multischichtstruktur (3) auf dem Substrat (4) durch van der Waals Kräfte und/oder kovalente Bindungen befestigt ist.

3. Ablenkvorrichtung (14) gemäß einem der vorangehenden Ansprüche, wobei die ersten Brechungsindizes von mindestens zwei oder allen der ersten Schichten (1) im Wesentlichen gleich sind und/oder wobei mindestens zwei oder alle der ersten Schichten (1) im Wesentlichen aus demselben Material bestehen und/oder wobei mindestens zwei oder alle der ersten Schichten (1) im Wesentlichen gleiche Schichtdicken aufweisen.

4. Ablenkvorrichtung (14) gemäß einem der vorangehenden Ansprüche, wobei die zweiten Brechungsindizes von mindestens zwei oder allen der zweiten Schichten (2) im Wesentlichen gleich sind und/oder wobei mindestens zwei oder alle der zweiten Schichten (2) im Wesentlichen aus demselben Material bestehen und/oder wobei mindestens zwei oder alle der zweiten Schichten (2) im Wesentlichen gleiche Schichtdicken aufweisen.

5. Ablenkvorrichtung (14) gemäß einem der vorangehenden Ansprüche, wobei das Substrat (4) zumindest eines der folgenden Materialien umfasst: Silizium Si, Quarzglas SiO₂, Aluminiumoxid Al₂O₃, Saphir, und Siliziumkarbid SiC.

6. Ablenkvorrichtung (14) gemäß einem der vorangehenden Ansprüche, wobei die ersten Schichten (1) und die zweiten Schichten (2) jeweils aus Halbleiter bestehen und/oder zumindest eines der folgenden Materialien aufweist: binäre, ternäre und/oder quaternäre Verbindungen von III-V-Halbleiter und/oder II-VI-Halbleiter und/oder Aluminium-Gallium-Arsenid AlₓGa₁As mit einen variablen Aluminiumanteil.

7. Ablenkvorrichtung (14) gemäß einem der vorangehenden Ansprüche, wobei die Multischichtstruktur (3) eine Wärmeleitfähigkeit von mehr als 5 W/mK aufweist.

8. Ablenkvorrichtung (14) gemäß einem der vorangehenden Ansprüche, wobei zumindest eine der zweiten Schichten (2) epitaktisch auf einer der ersten Schichten (1) aufgewachsen ist und/oder wobei zumindest eine erste der ersten Schichten (1) epitaktisch auf einer der zweiten Schichten (2) aufgewachsen ist.

9. Ablenkvorrichtung (14) gemäß einem der vorangehenden Ansprüche, wobei die Multischichtstruktur (3) mehr als 5, insbesondere mehr als 10 und bevorzugt mehr als 20 monokristalline erste und zweite Schichten umfasst und/oder eine Dicke von mehr als 0,5 µm, insbesondere von mehr als 1 µm, bevorzugt von mehr als 5 µm aufweist.

10. Ablenkvorrichtung (14) gemäß einem der vorangehenden Ansprüche, wobei die Multischichtstruktur (3) eingerichtet ist, um einen maximalen Anteil einer einfallenden elektromagnetischen Strahlung in einem vorbestimmten Wellenlängenbereich zu reflektieren, oder
wobei die Multischichtstruktur (3) eine Absorption in dem vorbestimmten Wellenlängenbereich von weniger als etwa 50 ppm, insbesondere weniger als etwa 10 ppm und bevorzugt weniger als etwa 1 ppm aufweist.

11. Ablenkvorrichtung (14) gemäß Anspruch 10, wobei der vorbestimmte Wellenlängenbereich zwischen etwa 900 nm und 1100 nm und/oder zwischen etwa 450 nm und 750 nm liegt und/oder wobei der vorbestimmte Wellenlängenbereich einem um eine Bearbeitungslaserwellenlänge zentrierten Bereich von 50 nm, bevorzugt von 20 nm, entspricht.

12. Ablenkvorrichtung (14) gemäß einem der vorangehenden Ansprüche, wobei der erste Wertebereich der ersten Brechungsindizes etwa zwischen 1,8 und 5,5 liegt und der zweite Wertebereich der zweiten Brechungsindizes etwa zwischen 1,2 und 4,6 liegt.

13. Ablenkvorrichtung (14) gemäß einem der vorangehenden Ansprüche, weiter umfassend mindestens eine Spiegelbeschichtung (5, 6),
wobei die mindestens eine Spiegelbeschichtung (5, 6) eine dielektrische und/oder eine metallische Schicht umfasst,
wobei die mindestens eine Spiegelbeschichtung (5, 6) zwischen der Multischichtstruktur (3) und dem Substrat (4) und/oder auf einer Fläche des Substrats (4), die der Multischichtstruktur (3) abgewandt ist, angeordnet ist, und
wobei die mindestens eine Spiegelbeschichtung (5, 6) für einen anderen Wellenlängenbereich reflektierend ist als die Multischichtstruktur (3).

14. Ablenkvorrichtung (14) gemäß einem der vorangehenden Ansprüche, weiter umfassend mindestens eine Antriebvorrichtung (16), die dazu ausgelegt ist, das Spiegelelement (10) um mindestens eine Achse zu drehen und/oder lateral zu verschieben und/oder zu verformen.

15. Laserbearbeitungskopf (100) für die Bearbeitung eines Werkstücks (13), umfassend:
eine Einkoppelvorrichtung (11) zum Einkoppeln eines Bearbeitungslaserstrahls (15) in einen Strahlengang (17) des Laserbearbeitungskopfes (100);
mindestens eine Linse (12) oder ein Linsensystem zum Fokussieren des Bearbeitungslaserstrahls (15) auf das Werkstück (13); und
mindestens ein Spiegelelement (10) zum Ablenken des Bearbeitungslaserstrahls (15),
wobei das Spiegelelement (10) mindestens ein Substrat (4) und mindestens eine auf dem Substrat (4) angeordnete reflektierende Multischichtstruktur (3) aufweist, in der eine Mehrzahl von kristallinen ersten Schichten (1) mit ersten Brechungsindizes in einem ersten Wertebereich und eine Mehrzahl von kristallinen zweiten Schichten (2) mit zweiten Brechungsindizes in einem zweiten Wertebereich alternierend übereinander angeordnet sind, und wobei die ersten Brechungsindizes der kristallinen ersten Schichten (1) und die zweiten Brechungsindizes der kristallinen zweiten Schichten (2) voneinander verschieden sind.
